# EUROPEAN PATENT APPLICATION

(11) **EP 3 382 732 A1**
(43) Date of publication of application: **03.10.2018**
(21) Application number: 16867879.5
(22) Date of filing: 08.11.2016
(51) Int. Cl.: H01H 9/02

(54) **MOULDED CASE CIRCUIT BREAKER BED**

(30) Priority: 27.11.2015 CN 201510848304
(71) Applicant: DSM IP Assets B.V., 6411 TE Heerlen (NL)
(72) Inventor: LIU, Cheng, Shanghai 201203 (CN)
(74) Representative: DSM Intellectual Property
(86) International application number: PCT/CN2016/105030
(87) International publication number: WO 2017/088655

(57) **Abstract**

Present application relates to a molded case circuit breaker base comprising a terminal section, an arc extinguish section, a contactor section, an operation section and a tripping section, characterized in that the molded case circuit breaker base is made of a thermoplastic composition having a thermally conductivity of 1.0 - 5.0 W/(m*K) in plane and 0.5 - 2 W/(m*K) through plane measured according to ASTM E1461; wherein the molded case circuit breaker base is portioned into several phase chambers; wherein the circuit breaker base has one phase chamber, two phase chambers , three phase chambers or four phase chambers.

## Description

Present application relates to a molded case circuit breaker base, especially, relates to a molded case circuit breaker base which is made of a thermoplastic composition.

A circuit breaker is an automatically-operated electrical switch designed to protect an electrical circuit from being damaged caused by overload or short circuit. Its basic function is to detect a fault condition and, by interrupting continuity, to immediately discontinue the electrical flow. Unlike a fuse which operates once and then needs to be replaced, a circuit breaker can be reset (either manually or automatically) to resume normal operation. Circuit breakers are made in varying size, from small devices that protect an individual household appliance up to large switchgear designed to protect high voltage circuits feeding an entire city.

All circuit breakers have common features in their operation, although details vary substantially depending on the voltage class, current rating and type of the circuit breaker. Low voltage (less than 1000 VAC) electrical circuit breakers, include miniature and mini circuit breakers(MCBs), molded case circuit breakers (MCCBs), residual current devices (RCDs) and circuit breakers that combine the functions of a RCD with overcurrent protection(RCBOs), are common in domestic, commercial and industrial application. In addition, circuit breakers typically comprise casing or housing molded from thermoplastic or thermoset materials.

Temperature rise which results from the poor heat dissipate from the electric conduct circuit, is a big issue need to be resolved in the process of the miniaturization of the molded case circuit breaker. When the power is connected, heat is generated from the electric conduct circuit. Due to the confined space, the temperature of the electric conduct circuit rise quickly.

Generally, there are two ways to control the temperature rise of the MCCB and limit it under a safe level. One option is to decrease the rated power of a special dimension, the other option is to increase the heat dissipate area of a MCCB with a rated power. Increasing of the dissipate area means the size of a rated power MCCB should be increased. Neither of the two fore mentioned options is desired since the miniaturization of a rated power MCCB is a trend.

In the prior art, a thermoset or thermoplastic composition is used to produce a circuit breaker base. Due to the poor thermal conductivity property of the composition, the obtained molded case circuit breaker has a very limited capacity. To reach a rated capacity under a setting dimension, an external heat sink is needed.

Present application provide a molded case circuit breaker base comprising a terminal section, an arc extinguish section, a contactor section, an operation section and a tripping section, characterized in that the molded case circuit breaker base is made of a thermoplastic composition having a thermal conductivity of 1.0 - 5.0 W/(m*K) in plane and 0.5 - 2 W/(m*K) through plane measured according to ASTM E1461; wherein the molded case circuit breaker base is portioned into several phase chambers; wherein the circuit breaker base has one phase chamber, two phase chambers , three phase chambers or four phase chambers.

Preferably, the thermal conductivity of the thermoplastic composition ranges from 1.5 to 5 W/(m*K); more preferably ranges from 1.6 to 3 W/(m*K); most preferably ranges from 1.8 to 2.3W/(m*K).
Preferably, the thermoplastic composition comprising, or consisting of,
20-70 wt.% of base polymer;
10-30 wt.% of thermally conductive and electrically insulating fillers;
10-30 wt.% of glass fiber;
10-25 wt.% of flame retardant agent;
0-20 wt.% of additional additives;
relative to the total weight of the composition.

Preferably, the flame retardant rating of the thermoplastic composition is V-2, V-1 or V-0, more preferably, V-2 or V-1, measured according to IEC 60695-11-10.

Preferably, wherein the tensile modulus of thermoplastic composition ranges from 7000 to 17000 MPa, more preferably, 10000 to 14000 MPa, measured according to ISO 527-1/-2.

Preferably, the break elongation of the thermoplastic composition ranges from 1.0 to 3.0%, more preferably, 1.5 to 2.2%, measured according to ISO 527-1/-2.

The thermoplastic composition which can withstand high temperatures are used, such as a polyamide, polyester, PPS and/or polyether.

The polyamide used as a material of the molded case circuit breaker base according to present application can be any semi-crystalline polyamide with a melting point Tm of at least 200°C or amorphous polyamide with a glass transition point Tg of at least 200°C as measured by DSC at a heating rate of 10°C/min according to standard ISO 11357-3 (2009). Advantageously, the polyamide has a Tm or Tg of at least 220°C as measured by DSC at a heating rate of 10°C/min according to standard ISO 11357-3 (2009). Suitable polyamides include aliphatic polyamides, such as PA6, PA4,6 and PA6,6, and semi-aromatic polyamides and mixtures thereof.

Suitable semi-aromatic polyamides also include copolyamides obtained from terephthalic acid, 2,2,4- and 2,4,4-trimethylhexamethylenediamine, copolyamide obtained from isophthalic acid, laurinlactam and 3,5-dimethyl-4,4-diaminodicyclohexylmethane, copolyamide obtained from isophthalic acid, azelaic acid and/or sebacic acid and 4,4-diaminodicyclohexylmethane, copolyamide obtained from caprolactam, isophthalic acid and/or terephthalic acid and 4,4-diaminodicyclohexylmethane, copolyamide obtained from caprolactam, isophthalic acid and/or terephthalic acid and isophoronediamine, copolyamide obtained from isophthalic acid and/or terephthalic acid and/or other aromatic or aliphatic dicarboxylic acids, optionally alkylsubstituted hexamethylenediamine and alkyl-substituted 4,4-diaminodicyclohexylamine, and copolyamides of the aforementioned polyamides, provided they have a Tm (or Tg) of at least 200°C.

In the context of the present invention, the term melting temperature is to be understood as the melting temperature measured by DSC at a heating rate of 10°C/min according to standard ISO 11357-3 (2009) and determined as the temperature with the highest melting enthalpy. With the term glass transition temperature is herein understood the temperature measured by DSC at a heating rate of 10°C/min according to standard ISO 11357-3 (2009) and determined as the temperature at the peak of the first derivative (with respect of time) of the parent thermal curve corresponding with the inflection point of the parent thermal curve.

The polyamide used in present application is selected from the groups consisting of polyamide 6, polyamide 46, polyamide 56, polyamide 66, polyamide 410, polyamide 510, polyamide 610, polyamide 6T, polyamide 8T, polyamide 9T, polyamide10T, and copolyamides thereof; copolyamides of polyamide 6T, polyamide 8T, polyamide 9T and polyamide 10T with other polyamide such as polyamide 4T, polyamide 5T, polyamide 7T, polyamide 12T; copolyamide of polyamide 6T, polyamide 4T and polyamide 46(such as polyamide 6T/4T/46) copolyamide of polyamide 6T, polyamide 66 and polyamide 46(such as polyamide 6T/66/46), copolyamide of polyamide 6T, polyamide 5T and polyamide 56(polyamide 6T/5T/56) and copolyamide of polyamide 6T, polyamide 66 and polyamide 56(such as polyamide 6T/66/56); more preferably, the polyamide is polyamide 6, polyamide 46, most preferably the polyamide is polyamide 46.

Preferably the thermoplastic composition has thermally conductivity property as well as electrically insulating property.

The thermoplastic composition typically comprises an organic polymer and thermally conductive filler dispersed therein. However, the thermally conductive fillers having a high thermal conductivity have a high electrical conductivity as well. Since only the electrically insulating composition can be used in present application, the amount of electrically conductive fillers present in the composition shall be limited within a limited scope, or be replaced by other electrical insulating fillers.

Suitable thermally conductive and electrically insulating fillers include boron nitride, as it has a relatively high intrinsic thermal conductivity and has no electrically conductivity. The boron nitride may be cubic boron nitride, hexagonal boron nitride, amorphous boron nitride, rhombohedral boron nitride, or another allotrope. It may be used in the form of powder, agglomerate or fibers. Exemplary boron nitrides are PT350, PT360 and PT370 which are commercially available from General Electrics Advanced compositions.

Another suitable thermally conductive and electrically insulating fillers include carbon black and graphite. The carbon black is an amorphous particulate carbon material which can be produced, for example, by oxidation of oil. The filler as such has electrically conductivity property. When a large amounts of such fillers are present, the obtained thermally conductive compositions cannot meet the requirement of electrically insulating. However, when only a low amount of such fillers in combination with other electrically insulating fillers are present, the obtained composition would have a good thermally conductivity as well as enough electrically insulating properties.

Other suitable examples of thermally conductivity and electrically insulating fillers include coated metal spheres, aluminum oxide (Al₂O₃), Aluminum nitride (AIN), silicon carbide (SiC) and diamond.

Preferably the thermoplastic composition comprises 10 to 30 wt.% of thermally conductivity and electrically insulating fillers relative to the total weight of the composition. Most preferably, it comprises 15 to 25 wt.% boron nitride and carbon black relative to the total weight of the composition.

Next to boron nitride and carbon black, any material, that can improve the thermal conductivity of the polymer composition, can be dispersed in the thermoplastic composition.

In addition to the above mention fillers, the thermoplastic composition may also comprise other thermally conductive and electrically conductive fillers, provided that the amount present is low enough to make sure the obtained composition can meet the requirement of the electrically insulating properties.

A thermoplastic composition is herein understood a composition having a volume rate of insulation resistance ranges from 1E10 to 1E16 Ωm, measured by the method according to IEC 60093. For the volume electrical resistivity testing, test specimens of 80 x 80 x 2 mm are used. Specimens are conditioned at 23°C and 50% relative humidity for 40 hours before testing. Preferably, the thermally conductive electrically insulating plastic composition used in the application has a volume rate of insulation resistivity of 1E12 Ωm.

The molded case circuit breaker base can be prepared for example by means of injection-molding.

The thermoplastic composition may include additives, known by the person skilled in the art of making such molding compositions. Suitable additives are, for example, stabilizers, such as UV stabilizers, heat stabilizers and antioxidants, colorants, processing aids, for example mold release agents and lubricants, flow improving additives, such as polyamide oligomers, agents for improving the impact resistance, fillers, reinforcing agents, such as carbon fibers and glass fibers, and flame retardants, such as halogen containing flame retardants, halogen free flame retardants and flame retardant synergists. The composition may optionally also contain polymers other than polyamides.

Most preferably, the thermoplastic composition comprises Stanyl™ (available from DSM) with specific grades including TC153, TC155, TC154, and TC168. Arnite™ XLT Akulon™ TC185, TC186. Other examples of temperature resistant plastic include but not limited to PA6(from BASF, EMS, Lanxess, Solvay, KingFa), PA66 (from BASF, Dupont, Lanxess, Solvay, SABIC, Asahi, KingFa), PA 9T (from Kururay), Zytel HTN (PA6T/66 HTN from DuPont), PA6T (from Solvay) PA6T/10T and PA10T/6T (from EMS and KingFa).

Present application further provides a molded case circuit breaker comprising a molded case circuit breaker base, contactors, terminals, operation mechanism and tripping, wherein the contactor is connected with the base directly or via a thermal conductive media; wherein the media is metal, thermal conductive glue or other thermal conductible composition; wherein the thermal conductivity of the thermal conductive media is higher than 1 W/(m*K)

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, when the indefinite article is used, the specification is to be understood as contemplating plurality as well as singularity, unless the context requires otherwise. Features, integers, characteristics, compounds, chemical moieties or groups described in conjunction with a particular aspect, embodiment or example of the invention are to be understood to be applicable to any other aspect, embodiment or example described herein unless incompatible therewith.

### Technical effect

The molded case circuit breaker base disclosed in present application has a good thermal conductivity property, as a result, the size reduction of the circuit breaker with a rated power is realized. This also provided a solution to increase the capacity of the circuit breaker with a setting size.

### Figures

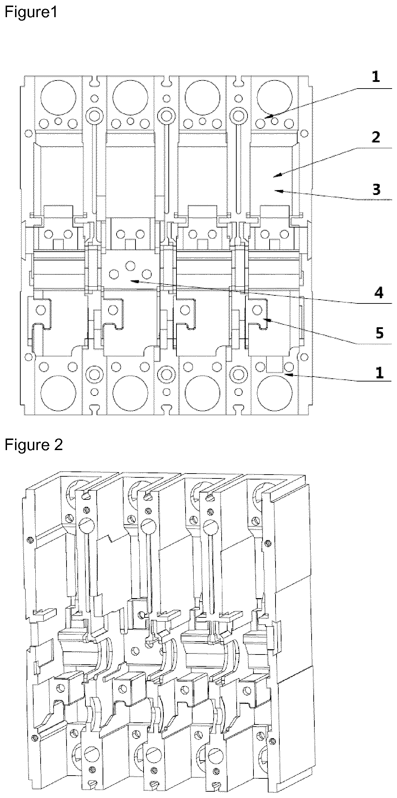

Figure 1 is a schematic of a molded circuit breaker base.
   1 represents terminal section; 2 represents arc extinguish section; 3 represents contactor section; 4 represents operation section; 5 represents tripping section.
Figure 2 is a schematic of a molded circuit breaker base.
Figure 3 is the average temperature increasing curve of the phase A, B, C of the two MCCB obtained from examples.
Figure 4 is the temperature increasing curves of phase B upstream of the two MCCB obtained from examples.

### Example 1

A three phases (phase A, phase B, phase C) MCCB base was molded by using DSM Stanyl ® TC168(thermal conductivity of 2.1 W/(m*K) in plane and 0.9 W/(m*K) through plane). The obtained MCCB base comprised terminal section, arc extinguish section, contactor section, operation section, and tripping section.

MCCB-1 was assembled by using the obtained base and the static contactors were connected to the base via thermal conductible glue (SialnexST0903 thermal conductivity of 30 W/(m*K)).

### Example 2

A three phases (phase A, phase B, phase C) MCCB base was molded by using DSM Stanyl ® TE250F6 (thermal conductivity of 0.4 W/(m*K) in plane and 0.35 W/(m*K) through plane) in the same mold as used in example 1. MCCB-2 with same rated power as MCCB-1 was assembled by using the base obtained from example 2.

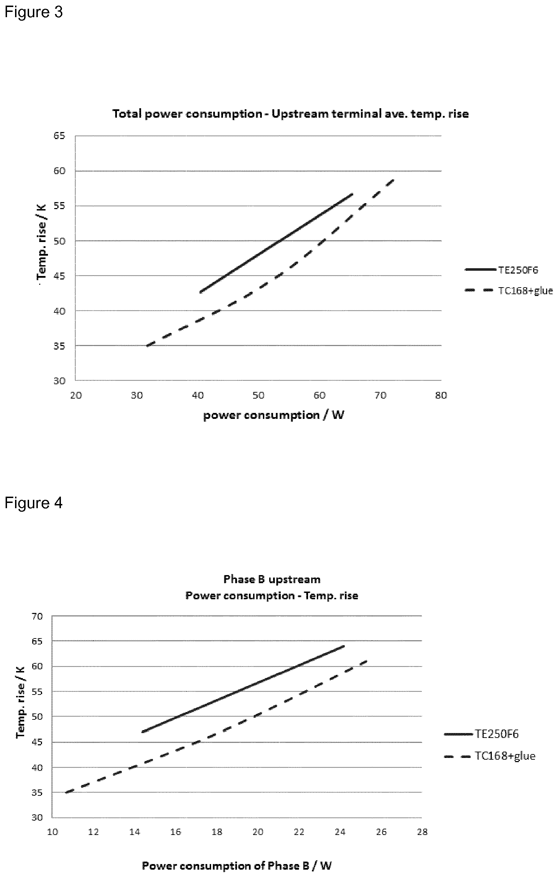

Temperature increasing of the terminals of the MCCB-1 and MCCB-2 under different power consume were measured according to IEC60947-2 7.2.2. and the results were showed in figure 3 and figure 4.

### Conclusion

The temperature increasing of the terminals of MCCB-1, comparing with MCCB -2, under the same power consuming, is about 5K lower. This result means that, comparing with MCCB-2 base, MCCB-1 base has a better heat dissipation property.

## Claims

1. A molded case circuit breaker base comprising a terminal section, an arc extinguish section, a contactor section, an operation section and a tripping section, **characterized in that** the molded case circuit breaker base is made of a thermoplastic composition having a thermal conductivity of 1.0 - 5.0 W/(m*K) in plane and 0.5 - 2 W/(m*K) through plane measured according to ASTM E1461; wherein the molded case circuit breaker base is portioned into several phase chambers; wherein the molded case circuit breaker base has one phase chamber, two phase chambers , three phase chambers or four phase chambers.

2. The molded case circuit breaker base according to claim 1, wherein the thermoplastic composition comprising:
20-70 wt.% of base polymer;
10-30 w.t% of thermally conductive and electrically insulating filler;
10-30 wt.% of glass fiber;
10-25 wt.% of flame retardant agent;
0-20 wt.% of additional additives;
relative to the total weight of the composition.

3. The molded case circuit breaker base according to claim 2, wherein the base polymer is one or more selected from the groups consisting of polyamide, polyester, PPS and/or polyether.

4. The molded case circuit breaker base according to claim 3, wherein the polyamide is selected from the groups consisting of polyamide 6, polyamide 46, polyamide 56, polyamide 66, polyamide 410, polyamide 510, polyamide 610, polyamide 6T, polyamide 8T, polyamide 9T, polyamide10T, and co polyamide thereof; co polyamide of polyamide 6T, polyamide 8T, polyamide 9T and polyamide 10T with other polyamide such as polyamide 4T, polyamide 5T, polyamide 7T, polyamide 12T; co polyamide of polyamide 6T, polyamide 4T and polyamide 46(polyamide 6T/4T/46) copolyamide of polyamide 6T, polyamide 66 and polyamide 46(polyamide 6T/66/46), copolyamide of polyamide 6T, polyamide 5T and polyamide 56(polyamide 6T/5T/56) and co polyamide of polyamide 6T, polyamide 66 and polyamide 56(polyamide 6T/66/56); more preferably, the polyamide is polyamide 6, polyamide 46, most preferably the polyamide is polyamide 46.

5. The molded case circuit breaker base according to claim 1, wherein the volume rate of insulation resistance of the thermoplastic composition ranges from 1E10 to 1E16 Ωm measured according to IEC 60093.

6. The molded case circuit breaker base according to claim 1, wherein the flame retardant rating of the thermoplastic composition is V-2, V-1 or V-0, measured according to IEC 60695-11-10.

7. The molded case circuit breaker base according to claim 1, wherein the tensile modulus of thermoplastic composition ranges from 7000 to 17000 MPa, measured according to ISO 527-1/-2.

8. The molded case circuit breaker base according to claim 1, wherein the break elongation of the thermoplastic composition ranges from 1.0 to 3.0%, measured according to ISO 527-1/-2.

9. A molded case circuit breaker comprising a molded case circuit breaker base according claim 1, comprising contactors, terminals, operation mechanisms and trippings, wherein the contactor is connected with the base directly or via a thermal conductive media; wherein the thermal conductive media is metal, thermal conductive glue or other thermal conductible composition, wherein the thermal conductivity of the thermal conductive media is higher than 1 W/(m*K).
